# EUROPEAN PATENT SPECIFICATION

(11) **EP 3 403 507 B1**
(45) Date of publication and mention of the grant of the patent: **14.08.2019**
(21) Application number: 17171953.7
(22) Date of filing: 19.05.2017
(51) Int. Cl.: A23D 7/00, A23D 7/005, A23D 7/01

(54) **LIQUID MARGARINE COMPRISING TRIGLYCERIDES OF MCT-FATTY ACIDS, ITS USE AND A PROCESS FOR PREPARING SUCH**
FLÜSSIGE MARGARINE MIT TRIGLYCERIDEN VON MKT-FETTSÄUREN, VERWENDUNG DAVON UND VERFAHREN ZUR HERSTELLUNG DAVON
MARGARINE LIQUIDE COMPRENANT DES TRIGLYCÉRIDES D'ACIDES GRAS MCT, SON UTILISATION ET SON PROCÉDÉ DE PRÉPARATION

(43) Date of publication of application: 21.11.2018
(73) Proprietor: Unilever BCS Europe B.V., 3013 AL Rotterdam (NL); Unilever BCS Limited, London, EC4Y 0DY (GB); UNILEVER N.V., 3013 AL Rotterdam (NL); Unilever PLC, London Greater London EC4Y 0DY (GB)
(72) Inventor: HOGERVORST, Wim, Theodorus, 3133 AT Vlaardingen (NL)
(74) Representative: EP&C

(56) References cited:
- EP-A1- 0 848 912
- EP-A2- 0 322 027
- DE-B- 1 077 042
- US-A- 3 796 815
- US-A1- 2002 155 208

## Description

### Field of the Invention

The present invention relates to a liquid edible fat-continuous emulsion (e.g. a liquid margarine) which emulsion contains next to the typical long-chain fatty acids (e.g. 16 carbon atoms and longer, as triglycerides), also some specific medium chain fatty acids (as triglycerides), notably caprylic acid and capric acid, and which contains no or only a small amount of lauric fatty acids in its triglycerides. The invention further relates to a process to manufacture such emulsions, and to the use of such emulsions for (shallow) frying.

### Background of the invention

Preparing a hot meal frequently involves (shallow) frying or sautéing meat, fish or vegetables (such as onions) in a skillet or frying pan. It is customary, in order to prevent sticking of the food to the hot surface of the skillet or frying pan, to first pre-heat the skillet or frying pan, then add a fat or oil containing matter, let such heat to the desired temperature, and only thereafter adding the meat, fish, vegetables or other food to be shallow-fried or sautéed.

Typical fat or oil containing composition used for such are (dairy) butter, vegetable margarine (in solid form), and vegetable oils like sunflower oil, olive oil, and the like. Butter is preferred by some for the taste, but vegetable-based margarines and vegetable oils are considered as a healthier alternative. Margarine is used in a similar fashion as butter: a block packaged in a wrapper which is stored in the fridge, and with a knife or spoon or the like the desired portion is taken from it and added to the hot skillet or pan. Such margarines generally contain 10-25% of dispersed aqueous phase dispersed in vegetable fat. Liquid vegetable oils like sunflower oil and olive oil are preferred by some over margarines, e.g. for the ease of dosing (pouring from a bottle).

A disadvantage of using liquid oils for frying purposes such purpose is that they do not contain the non-fat ingredients that are part of butter and often margarines and that contribute to the typical shallow frying or sautéing experience. Such non-fat ingredients are e.g. water, salt, lecithin. The typical shallow frying or sautéing experience referred to when using butter or margarines is that after the butter or margarine melts a little foam is formed, e.g. by the evaporating water that was part of the aqueous phase in the butter or margarine. The formation of this foam may indicate to the user that the fat is now hot enough for the meat, fish or vegetables to be added to the skillet or (shallow) frying pan. For such foam formation presence of some water in the formulation is required.

Butter and margarine sold in wrappers are typically water in oil emulsions, containing about 20% water. Such products may give a nice foam formation, but they lack the ease of dosing of liquid products and take time to melt. Liquid margarines in the form of water-in-oil emulsions can give both advantages: ease of dosing and foam formation. Still, such liquid margarines may show more or less spattering upon heating. Spattering upon heating (above 100°C) of (liquid) margarines is preferably kept to a minimum.

US 2002/155208 discloses liquid margarines comprising an aqueous phase and protein coated gas microbubbles. The food product has reduced spattering during shallow frying. US 3796815 discloses a pourable margarine consisting of an aqueous phase emulsified with a fatty phase, the aqueous phase comprising a monoacylglycerophosphatide. The spattering behavior is significantly improved as compared with the stability and spattering behavior of pourable margarines prepared with unhydolyzed phosphatides in the aqueous phase.

### Summary of the Invention

Hence, it is an object of the present invention to provide a liquid margarine in the form of a liquid (pourable) water-in-oil emulsion, which shows a reduced tendency of spattering upon heating the liquid margarine in the frying pan, prior to adding the components to be fried. Preferably, such liquid margarines do not require ingredients other than fats, oils or fractions thereof (for reasons of appeal to the consumer), salt and lecithin for such (ingredients like colourants, vitamins etc. may be preferred to be present, but do not contribute to the foaming or spattering behaviour).

It has been found that such objectives can be reached, at least in part, by a liquid edible fat-continuous emulsion comprising from 3 to 40% by weight on the total emulsion of a dispersed aqueous phase and from 60 to 97% by weight on the total emulsion of a continuous fat phase, wherein said fat phase comprises 80-100% by weight on the total fat phase of triglycerides of fatty acids, wherein these fatty acids are present in the following amounts (by weight, on the total of fatty acids):
- 1 - 15% of caprylic acid (C8:0)
- 1 - 15% of capric acid (C10:0)
- 0 - 1% of lauric acid (C12:0)
- 40 - 95% of fatty acids of 16 carbon atoms length or longer, single or multiple unsaturated taken together
- 5 - 25 of saturated fatty acids of 16 carbon atoms length or longer.

Such product can be prepared by a process for preparing a liquid edible fat-continuous emulsion comprising from 3 to 40% by weight on the total emulsion of a dispersed aqueous phase and from 60 to 97% by weight on the total emulsion of a continuous fat phase, wherein said process comprises the steps of:
a) providing an aqueous phase,
b) providing a fat phase comprising 5 to 50% of a fractionated coconut fat which contains less than 10% lauric fatty acid by weight on the coconut fat, 50 to 95% of a vegetable oil liquid at 15°C, and 1 to 5% of a fat solid at 40°C, the fat phase being at a temperature at which the fat phase is liquid,
c) mixing the fat phase of step b) with the aqueous phase of step a) to form a water-in-oil emulsion, wherein the temperatures of the fat phase and the aqueous phase are such that the temperature of the resulting emulsion is above 60°C,
d) subjecting the emulsion of step c) to a scraped surface heat exchanger with an exit temperature of between 0 and 40°C.

The invention further relates to the use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables (typically shallow frying or sautéing), wherein said fat phase comprises 80-100% by weight on the total fat phase of triglycerides of fatty acids, wherein these fatty acids are present in the following amounts (by weight, on the total of fatty acids):
- 1 -15% of caprylic acid (C8:0)
- 1 -15% of capric acid (C10:0)
- 0 - 1% of lauric acid (C12:0)
- 40 - 95% of fatty acids of 16 carbon atoms length or longer, single or multiple unsaturated taken together
- 5 - 25 of saturated fatty acids of 16 carbon atoms length or longer.

### Detailed description of the invention

In the present invention, when we speak of a fatty acid composition or fatty acid distribution or the presence of certain fatty acids, it is herein to be understood as to refer to triglycerides containing such fatty acids. Hence, the fatty acid composition is as if the fat or oil that it concerns was broken down entirely in fatty acids. Needless to say, some (e.g. less than 3%) fatty acid may be present as free fatty acid, fatty acid mono- or diglycerides, but all other is in in the form of triglycerides.

It was discovered by the present inventors, that surprisingly, the presence of a relative high proportion of medium chain fatty acids such as caprilyc acid (C8:0) and capric acid (C10:0), not as free fatty acids but as part of the triglycerides of the fats and oils contributes to a favourable (i.e. reduced) spattering behaviour upon heating of a liquid emulsion containing such fats and oils. Ensuring such fatty acids are present in the emulsions concerned may be effected by including a certain amount of a fractionated coconut oil into the liquid margarine, and then the fractionated coconut oil should be a fraction which is low in lauric acid.

Thus, the invention relates to the use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables, wherein the continuous fat phase comprises 5 to 20% of coconut fat, characterised in that lauric acid has been removed from said coconut fat such that the coconut fat contains less than 5% by weight of lauric fatty acid.

As mentioned above, presence of some water is preferred for e.g. foam formation. In the present invention, it is preferred e.g. for this reason, that the liquid edible fat-continuous emulsion according to the present invention comprises from 5 to 35% by weight on the total formulation of a dispersed aqueous phase and from 65 to 95% by weight on the total emulsion of a continuous fat phase, preferably the emulsion comprises from 10 to 30% by weight on the total formulation of a dispersed aqueous phase and from 70 to 90% by weight on the total emulsion of a continuous fat phase.

As mentioned, presence of some medium chain fatty acids like caprylic acid and capric acid and a low amount of lauric acid is preferred for an improved spattering behaviour Hence, in the present liquid edible fat-continuous emulsion the fat phase preferably comprises 80-100% by weight on the total fat phase of triglycerides of fatty acids, wherein these fatty acids are present in the following amounts (by weight, on the total of fatty acids):
- 2- 12 % of caprylic acid, preferably 4 - 10% of C8:0
- 2 - 12 % of capric acid, preferably 3 - 8% of C10:0
- 0 - 0.8% of lauric acid, preferably 0 -0.6% of C12:0
- 50 - 90% of fatty acids of 16 carbon atoms length or longer, single or multiple unsaturated taken together
- 7 - 20% of saturated fatty acids of 16 carbon atoms length or longer.

A common ingredients in margarines intended for (shallow) frying (be it liquid margarines or solid margarines), for taste reasons and spattering behaviour after adding meat, fish or vegetable matter to the hot oil is salt. Hence, in the present invention it is preferred that the liquid edible fat-continuous emulsion further comprises from 0.2 to 2% of a salt, preferably NaCl.

Another component generally present in (liquid) margarines for (shallow) frying is lecithin, e.g. for emulsion stability and spattering behavior. Hence, in the present invention it is preferred that the emulsion further comprises from 0.1 to 0.7% by weight based on the emulsion of lecithin, more preferably from 0.15 to 0.5% of lecithin.

Other components that may be present in the formulation may be components like colourants, flavourings, and vitamins. Preferably such components are dissolved in either oil phase or the dispersed aqueous phase. Preferably the liquid edible fat-continuous emulsion according to the present invention contains no solid matter other than fat and/or a salt.

As mentioned, the compositions according to the present invention may be prepared by a process for preparing a liquid edible fat-continuous emulsion comprising from 3 to 40% by weight on the total emulsion of a dispersed aqueous phase and from 60 to 97% by weight on the total emulsion of a continuous fat phase, wherein said process comprises the steps of:
a) providing an aqueous phase,
b) providing a fat phase comprising 5 to 50% of a fractionated coconut fat which contains less than 10% lauric fatty acid by weight on the coconut fat, 50 to 95% of a vegetable oil liquid at 15°C, and 1 to 5% of a fat solid at 40°C, the fat phase being at a temperature at which the fat phase is liquid,
c) mixing the fat phase of step b) with the aqueous phase of step a) to form a water-in-oil emulsion, wherein the temperatures of the fat phase and the aqueous phase are such that the temperature of the resulting emulsion is above 60°C,
d) subjecting the emulsion of step c) to a scraped surface heat exchanger with an exit temperature of between 0 and 40°C.

In the above process, the vegetable oil liquid at 15°C comprises sunflower oil, soy bean oil, safflower oil, linseed oil, or a mixture thereof, e.g. for reasons of (real or perceived) health benefit and/or economy.

Some hardstock or structuring fat is generally needed in liquid margarines to stabilize the emulsions. In the above described process the "fat solid at 40°C" is such hardstock or structuring fat. Suitable hardstocks to be used in the present invention are fully hardened vegetable oils, such as RP70 (fully hardened rapeseed oil), and SF68 fully hardened sunflower oil). Hence, in the present invention the fat solid at 40°C comprises a fully hardened vegetable oil.

As mentioned above, the invention further relates to the use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables, wherein said fat phase comprises 80-100% by weight on the total fat phase of triglycerides of fatty acids, wherein these fatty acids are present in the following amounts (by weight, on the total of fatty acids):
- 1 -15% of caprylic acid
- 1 -15% of capric acid
- 0 - 1% of lauric acid
- 40 - 95% of fatty acids of 16 carbon atoms length or longer, single or multiple unsaturated taken together
- 5 - 25 of saturated fatty acids of 16 carbon atoms length or longer.

More preferably, in the above use said fat phase comprises 80-100% by weight on the total fat phase of triglycerides of fatty acids, wherein these fatty acids are present in the following amounts (by weight, on the total of fatty acids):
- 2- 12 % of caprylic acid, preferably 4 - 10% of C8:0
- 2 - 12 % of capric acid, preferably 3 - 8% of C10:0
- 0 - 0.8% of lauric acid, preferably 0 -0.6% of C12:0
- 50 - 90% of fatty acids of 16 carbon atoms length or longer, single or multiple unsaturated taken together
- 7 - 20% of saturated fatty acids of 16 carbon atoms length or longer.

Even more preferably, for reasons stated earlier, in the above use the liquid edible fat-continuous comprises from 5 to 35% by weight on the total formulation of a dispersed aqueous phase and from 65 to 95% by weight on the total emulsion of a continuous fat phase, preferably the emulsion comprises from 10 to 30% by weight on the total formulation of a dispersed aqueous phase and from 70 to 90% by weight on the total emulsion of a continuous fat phase. Likewise, for reasons as were already mentioned for the composition, it is preferred that in the use according to the present invention the emulsion further comprises from 0.2 to 2% of a salt, preferably NaCl. And also likewise, it is preferred that in the use according to the present invention the liquid edible fat-continuous emulsion further comprises from 0.1 to 0.7% by weight based on the emulsion of lecithin, more preferably from 0.15 to 0.5% of lecithin.

The invention further relates to the use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables, wherein the continuous fat phase comprises 5 to 20% of coconut fat, characterised in that lauric acid has been removed from said coconut fat such that the coconut fat contains less than 5% by weight of lauric fatty acid.

### EXAMPLES

Three different liquid margarines, one according to the present invention (example 1) and two comparatives (Comparative A and Comparative B), have been prepared. These liquid margarines have been subjected to a spattering test: a spattering of fat upon heating on a hot flat surface to determine a spattering value (SV1) using a test as described herein. The SV1 test provides an indication how much the frying margarine will give spattering upon usage by a consumer, when heating the margarine in a shallow frying pan to the desired usage temperature and prior to entering food (e.g. meat, fish, onions).

### Spattering Value 1 (SV1) test protocol

The test involves heating a sample (21 g for a full fat product, 25 g for a 80% fat product) in a flat glass dish (diameter 14 cm, Petri dish of Duran 50, ex Schott-Mainz, flattened). The heating is by an electric heating plate, and between the heating plate and the glass dish there is an aluminium plate (diameter 18 cm, thickness 3 cm), with inserted in the aluminium a thermocouple. The thermocouple is arranged to control the heating of the aluminium plate to 205°C (± 5°C), which corresponds to a temperature of the oil layer (after evaporation of the water) of about 160-170°C. The aluminium plate is there to control the temperature and to provide even heating. The heating of the aluminium plate is started at least 30 minutes prior to entering a sample.
Prior to putting the flat glass dish in place for a measurement a testpaper (40x40 cm) is mounted 25 cm above the surface of the dish. This testpaper collects oil/fat droplets due to spattering upon heating. During the heating of the margarine a foam is formed, e.g. due to moisture evaporating from the margarine. The measurement is continued until all spattering is stopped (usually a few minutes). Then the testpaper is removed and the SV1 measurement is finished.
The testpaper so produced is visually (i.e. by the human eye of a lab technician) compared to standardized test papers of a set of 11: a value 0 for a testpaper with lots of spattering on it, a value 5 for intermediate amount of spattering on it, and a value 10 for no spattering on it.
Thus, a low value in the SV1 test as described above means a lot of spattering of heating the liquid margarine upon heating (no additional food present) and a high value in such SV1 test means less (or no, for value 10) spattering. Spattering upon heating is preferably kept as low as possible.

One formulation according to the invention has been made (example 1), which was tested in a spattering test twice (run 1a, run 1b). One comparative example not according to the present invention has been made in two different factories, each tested once (Comparative A, Comparative B). Both example 1 and the comparatives concern liquid margarines containing 79% total fat. The composition of the two examples is set out below in Table 1. The example according to the present invention was enriched in a coconut oil fraction (a fraction rich in C8:0, C10:0, but low in C12:0).

**Table 1: composition of example 1, com A, comp B, in weight % on total**

| Ingredient | Example 1 | Comparative A | Comparative B |
|---|---|---|---|
| rapeseed oil | 27.6 | 71.7 | 71.7 |
| sunflower oil | 27.3 | 5 | 5 |
| linseed oil | 11.7 | - | - |
| fractionated coconut oil (MCT rich, low in lauric acid | 10 | - | - |
| fully hardened rapeseed oil (RP70) | 2 | 2 | 2 |
| sunflower lecithin | 0.18 | 0.18 | 0.18 |
| soy lecithin (fractionated) | 0.1 | 0.1 | 0.1 |
| vitamin A palmitate, vitamin D2, beta-carotene, flavour | 0.3 | 0.2 | 0.2 |
| water (balance) | About 19.5 | About 19.5 | About 19.5 |
| salt (NaCl) | 1.5 | 1.5 | 1.5 |
| citric acid anhydrous | 0.015 | 0.002 | 0.002 |

The fat phase (including oils, the fully hydrogenated hardstock and the MCT coconut oil (for example A)) were added to a tank and heated above crystallization temperature (55-65°C). The minor fat soluble ingredients (e.g. lecithins, colourants, flavours) were pre-blended in a small amount of oil and dosed to the oil blend while mixing. Then the water phase was prepared by mixing water, brine solution and citric acid. The waterphase was added to the fatphase while mixing, resulting in the required water-in-oil emulsion. The mixture is kept at about 55-65°C for about 30 minutes. Then the emulsion was cooled down with a series of scraped surface-heaters (Gerstenberg A-units). The product is rapidly cooled down from 55-65°C to 10-12°C to induce product crystallization. After the product has been fully crystallized the product was filled into a buffer tank prior to the bottle filler. The semi-liquid product obtained was pourable at refrigerating temperatures (viscosity between 1200 and 1800mPa.s, measured at 100 s⁻¹). The droplet size D_{3,3} of the obtained emulsion was about 2-8µm.

The fatty acid composition of example 1, Comparative A and Comparative B are set out in table 2 below (fatty acids present as triglycerides).

**Table 2: fatty acid composition of example 1, comp. A, comp. B in weight % on total fatty acids**

| Fatty acid | Example 1 | Comparative A | Comparative B |
|---|---|---|---|
| C6:0 (caproic acid0 | 0.2 | - | - |
| C8:0 (caprylic acid) | 6.5 | 0 | 0 |
| C10:0 (capric acid) | 3.0 | 0 | 0 |
| C12:0 (lauric acid) | 0.2 | 0 | 0 |
| C14:0 (myristic acid) | 0.2 | 0 | 0 |
| C16:0 (palmitic acid) | 5.5 | 4.9 | 4.9 |
| C18:0 (stearic acid) | 4.1 | 2.7 | 2.7 |
| C18:1 (oleic acid) | 33.0 | 58.8 | 58.8 |
| C18:2 (linoleic acid) | 33.6 | 22.6 | 22.6 |
| C18:3 (linolenic acid9 | 11:9 | 9.0 | 9.0 |
| C20:0 (arachidic acid) | 0.5 | 0.7 | 0.7 |
| C22:0 (behenic acid) | 1.3 | 1.2 | 1.2 |
| Sum of all saturated fatty acids longer than C12:0 | 78.5 | 9.5 | 9.5 |
| Sum of all unsaturated fatty acids longer than C12 | 11.6 | 90.4 | 90.4 |

### Results

The spattering tests have been carried out using two test installations running simultaneously (installation 1, installation 2). The results these spattering tests as carried out above (SV1) is set out in table 3 below.

**Table 3**

| Spattering value SV1 | Example 1, run a | Example 1, run b | Comparative A | Comparative B |
|---|---|---|---|---|
| Installation 1 | 9.5 | 9 | 8 | 9.5 |
| Installation 2 | 9.5 | 10 | 8.5 | 8.5 |

The results show that the liquid margarines that contain 10% of a coconut fraction show a reduced tendency on spattering upon heating.

## Claims

1. Liquid edible fat-continuous emulsion comprising from 3 to 40% by weight on the total emulsion of a dispersed aqueous phase and from 60 to 97% by weight on the total emulsion of a continuous fat phase, wherein said fat phase comprises 80-100% by weight on the total fat phase of triglycerides of fatty acids, wherein these fatty acids are present in the following amounts (by weight, on the total of fatty acids):
- 1 -15% of caprylic acid
- 1 -15% of capric acid
- 0 - 1% of lauric acid
- 40 - 95% of fatty acids of 16 carbon atoms length or longer, single or multiple unsaturated taken together
- 5 - 25 of saturated fatty acids of 16 carbon atoms length or longer.

2. Liquid edible fat-continuous emulsion according to claim 1, which comprises from 5 to 35% by weight on the total formulation of a dispersed aqueous phase and from 65 to 95% by weight on the total emulsion of a continuous fat phase, preferably the emulsion comprises from 10 to 30% by weight on the total formulation of a dispersed aqueous phase and from 70 to 90% by weight on the total emulsion of a continuous fat phase.

3. Liquid edible fat-continuous emulsion according to claim 1 or 2, wherein said fat phase comprises 80-100% by weight on the total fat phase of triglycerides of fatty acids, wherein these fatty acids are present in the following amounts (by weight, on the total of fatty acids):
- 2- 12 % of caprylic acid, preferably 4 - 10% of C8:0
- 2 - 12 % of capric acid, preferably 3 - 8% of C10:0
- 0 - 0.8% of lauric acid, preferably 0 -0.6% of C12:0
- 50 - 90% of fatty acids of 16 carbon atoms length or longer, single or multiple unsaturated taken together
- 7 - 20% of saturated fatty acids of 16 carbon atoms length or longer.

4. Liquid edible fat-continuous emulsion according to any of claims 1 to 3, which further comprises from 0.2 to 2% of a salt, preferably NaCl.

5. Liquid edible fat-continuous emulsion according to any of claims 1 to 4, which further comprises from 0.1 to 0.7% by weight based on the emulsion of lecithin.

6. Process for preparing a liquid edible fat-continuous emulsion comprising from 3 to 40% by weight on the total emulsion of a dispersed aqueous phase and from 60 to 97% by weight on the total emulsion of a continuous fat phase, wherein said process comprises the steps of:
a) providing an aqueous phase,
b) providing a fat phase comprising 5 to 50% of a fractionated coconut fat which contains less than 10% lauric fatty acid by weight on the coconut fat, 50 to 95% of a vegetable oil liquid at 15°C, and 1 to 5% of a fat solid at 40°C, the fat phase being at a temperature at which the fat phase is liquid,
c) mixing the fat phase of step b) with the aqueous phase of step a) to form a water-in-oil emulsion, wherein the temperatures of the fat phase and the aqueous phase are such that the temperature of the resulting emulsion is above 60°C,
d) subjecting the emulsion of step c) to a scraped surface heat exchanger with an exit temperature of between 0 and 40°C.

7. Process according to claim 6, wherein the vegetable oil liquid at 15°C comprises sunflower oil, soy bean oil, safflower oil, linseed oil, or a mixture thereof.

8. Process according to claim 6 or 7, wherein the fat solid at 40°C comprises a fully hardened vegetable oil.

9. Use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables, wherein said fat phase comprises 80-100% by weight on the total fat phase of triglycerides of fatty acids, wherein these fatty acids are present in the following amounts (by weight, on the total of fatty acids):
- 1 -15% of caprylic acid
- 1 -15% of capric acid
- 0 - 1% of lauric acid
- 40 - 95% of fatty acids of 16 carbon atoms length or longer, single or multiple unsaturated taken together
- 5 - 25% of saturated fatty acids of 16 carbon atoms length or longer.

10. Use according to claim 9, wherein said fat phase comprises 80-100% by weight on the total fat phase of triglycerides of fatty acids, wherein these fatty acids are present in the following amounts (by weight, on the total of fatty acids):
- 2- 12 % of caprylic acid, preferably 4 - 10% of C8:0
- 2 - 12 % of capric acid, preferably 3 - 8% of C10:0
- 0 - 0.8% of lauric acid, preferably 0 -0.6% of C12:0
- 50 - 90% of fatty acids of 16 carbon atoms length or longer, single or multiple unsaturated taken together
- 7 - 20% of saturated fatty acids of 16 carbon atoms length or longer.

11. Use according to claim 9 or 10, wherein the liquid edible fat-continuous comprises from 5 to 35% by weight on the total formulation of a dispersed aqueous phase and from 65 to 95% by weight on the total emulsion of a continuous fat phase, preferably the emulsion comprises from 10 to 30% by weight on the total formulation of a dispersed aqueous phase and from 70 to 90% by weight on the total emulsion of a continuous fat phase.

12. Use according to any of claims 9 to 11, wherein the emulsion further comprises from 0.2 to 2% of a salt, preferably NaCl.

13. Use according to any of claims 9 to 12, wherein the liquid edible fat-continuous emulsion further comprises from 0.1 to 0.7% by weight based on the emulsion of lecithin.

14. Use of a liquid edible fat-continuous emulsion comprising from 3 to 40% by weight on the total emulsion of a dispersed aqueous phase and from 60 to 97% by weight on the total emulsion of a continuous fat phase for frying meat, fish or vegetables, wherein the continuous fat phase comprises 5 to 20% of coconut fat, **characterised in that** lauric acid has been removed from said coconut fat such that the coconut fat contains less than 5% by weight of lauric fatty acid.

## Patentansprüche

1. Flüssige, essbare fettkontinuierliche Emulsion umfassend zu 3 bis 40 Gew.-% der gesamten Emulsion eine disperse wässrige Phase und zu 60 bis 97 Gew.-% der gesamten Emulsion eine kontinuierliche Fettphase, wobei die Fettphase zu 80 - 100 Gew.% der gesamten Fettphase Triglyceride von Fettsäuren umfasst, wobei die Fettsäuren zu folgenden Anteilen vorhanden sind (Gewichtsanteile an den gesamten Fettsäuren):
- 1 - 15 % Caprylsäure
- 1 - 15 % Caprinsäure
- 0 - 1 % Laurinsäure
- 40 - 95 % Fettsäuren mit einer Länge von 16 Kohlenstoffatomen oder mehr, einfach und mehrfach ungesättigte zusammen genommen
- 5 - 25 % gesättigte Fettsäuren mit einer Länge von 16 Kohlenstoffatomen oder mehr.

2. Flüssige, essbare, fettkontinuierliche Emulsion gemäß Anspruch 1, welche zu zwischen 5 und 35 Gew.-% der gesamten Formulierung eine disperse wässrige Phase und zu zwischen 65 und 95 Gew.-% der gesamten Emulsion eine kontinuierliche Fettphase umfasst, vorzugsweise wobei die Emulsion zu zwischen 10 und 30 Gew.-% der gesamten Formulierung eine disperse wässrige Phase und zu zwischen 70 und 90 Gew.-% der gesamten Emulsion eine kontinuierliche Fettphase umfasst.

3. Flüssige, essbare, fettkontinuierliche Emulsion gemäß Anspruch 1 oder 2, wobei die Fettphase zu 80 - 100 Gew.-% der gesamten Fettphase Triglyceride von Fettsäuren umfasst, wobei diese Fettsäuren zu folgenden Anteilen vorhanden sind (Gewichtsanteile an den gesamten Fettsäuren):
- 2 - 12 % Caprylsäure, vorzugsweise 4 - 10 % von C8:0
- 2 - 12 % Caprinsäure, vorzugsweise 3 - 8 % von C10:0
- 0 - 0,8 % Laurinsäure, vorzugsweise 0 - 0,6 % von C12:0
- 50 - 90 % Fettsäuren mit einer Länge von 16 Kohlenstoffatomen oder mehr, einfach und mehrfach ungesättigte zusammen genommen
- 7 - 20 % gesättigte Fettsäuren mit einer Länge von 16 Kohlenstoffatomen oder mehr.

4. Flüssige, essbare, fettkontinuierliche Emulsion gemäß irgendeinem der Ansprüche 1 bis 3, zusätzlich umfassend zwischen 0,2 und 2 % Salz, vorzugsweise NaCl.

5. Flüssige, essbare, fettkontinuierliche Emulsion gemäß irgendeinem der Ansprüche 1 bis 4, zusätzlich umfassend zwischen 0,1 und 0,7 Gew.-% der Emulsion Lecithin.

6. Verfahren zur Herstellung einer flüssigen, essbaren, fettkontinuierlichen Emulsion umfassend zu 3 bis 40 Gew.-% der gesamten Emulsion eine disperse wässrige Phase und zu 60 bis 97 Gew.-% der gesamten Emulsion eine kontinuierliche Fettphase, wobei der Prozess folgende Schritte umfasst:
a) bereitstellen einer wässrigen Phase,
b) bereitstellen einer Fettphase umfassend 5 bis 50 % eines fraktionierten Kokosnussfettes, welches zu weniger als 10 Gew.-% des Kokosnussfettes aus Laurinsäure besteht, 50 bis 95 % eines bei 15 °C flüssigen Pflanzenöls, und 1 bis 5 % eines bei 40 °C festen Fettes, wobei die Fettphase eine Temperatur aufweist, bei der die Fettphase flüssig ist,
c) vermischen der Fettphase aus Schritt b) mit der wässrigen Phase aus Schritt a), um eine Wasser-in-ÖI-Emulsion zu bilden, wobei die Temperaturen der Fettphase und der wässrigen Phase so gewählt sind, dass die Temperatur der resultierenden Emulsion 60 °C beträgt,
d) behandeln der Emulsion aus Schritt c) in einem Wärmetauscher mit geschabter Oberfläche mit einer Austrittstemperatur zwischen 0 und 40 °C.

7. Verfahren gemäß Anspruch 6, wobei das bei 15 °C flüssige Pflanzenöl Sonnenblumenöl, Sojabohnenöl, Distelöl, Leinsamenöl oder eine Mischung daraus umfasst.

8. Verfahren gemäß einem der Ansprüche 6 oder 7, wobei das bei 40 °C feste Fett ein vollständig ausgehärtetes Pflanzenöl umfasst.

9. Verwendung einer flüssigen, essbaren, fettkontinuierlichen Emulsion umfassend zu 3 bis 40 Gew.-% der gesamten Emulsion eine disperse wässrige Phase und zu 60 bis 97 Gew.-% der gesamten Emulsion eine kontinuierliche Fettphase zum Braten von Fleisch, Fisch oder Pflanzen, wobei die Fettphase zu 80 - 100 Gew.-% der gesamten Fettphase Triglyceride von Fettsäuren umfasst, wobei diese Fettsäuren zu folgenden Anteilen vorhanden sind (Gewichtsanteile an den gesamten Fettsäuren):
- 1 - 15 % Caprylsäure
- 1 - 15 % Caprinsäure
- 0 - 1 % Laurinsäure
- 40 - 95 % Fettsäuren mit einer Länge von 16 Kohlenstoffatomen oder mehr, einfach und mehrfach ungesättigte zusammen genommen
- 5 - 25 % gesättigte Fettsäuren mit einer Länge von 16 Kohlenstoffatomen oder mehr.

10. Verwendung gemäß Anspruch 9, wobei die Fettphase zu 80 - 100 Gew.-% der gesamten Fettphase Triglyceride von Fettsäuren umfasst, wobei diese Fettsäuren zu folgenden Anteilen vorhanden sind (Gewichtsanteile an den gesamten Fettsäuren):
- 2 - 12 % Caprylsäure, vorzugsweise 4 - 10 % von C8:0
- 2 - 12 % Caprinsäure, vorzugsweise 3 - 8 % von C10:0
- 0 - 0,8 % Laurinsäure, vorzugsweise 0 - 0,6 % von C12:0
- 50 - 90 % Fettsäuren mit einer Länge von 16 Kohlenstoffatomen oder mehr, einfach und mehrfach ungesättigte zusammen genommen
- 7 - 20 % gesättigte Fettsäuren mit einer Länge von 16 Kohlenstoffatomen oder mehr.

11. Verwendung gemäß einem der Ansprüche 9 oder 10, wobei die flüssige, essbare, fettkontinuierliche Emulsion zu zwischen 5 und 35 Gew.-% der gesamten Formulierung eine disperse wässrige Phase und zu zwischen 65 und 95 Gew.-% der gesamten Emulsion eine kontinuierliche Fettphase umfasst, vorzugsweise wobei die Emulsion zu zwischen 10 und 30 Gew.-% der gesamten Formulierung eine disperse wässrige Phase und zu zwischen 70 und 90 Gew.-% der gesamten Emulsion eine kontinuierliche Fettphase umfasst.

12. Verwendung gemäß einem der Ansprüche 9 bis 11, wobei die Emulsion zusätzlich zwischen 0,2 und 2 % Salz, vorzugsweise NaCl, umfasst.

13. Verwendung gemäß einem der Ansprüche 9 bis 12, wobei die flüssige, essbare, fettkontinuierliche Emulsion zusätzlich zwischen 0,1 und 0,7 Gew.-% der Emulsion Lecithin umfasst.

14. Verwendung einer flüssigen, essbaren, fettkontinuierlichen Emulsion umfassend zu 3 bis 40 Gew.-% der gesamten Emulsion eine disperse wässrige Phase und zu 60 bis 97 Gew.-% der gesamten Emulsion eine kontinuierliche Fettphase zum Braten von Fleisch, Fisch oder Pflanzen, wobei die kontinuierliche Fettphase 5 - 20 % Kokosnussfett umfasst, **dadurch gekennzeichnet, dass** Laurinsäure in der Weise aus dem Kokosnussfett entfernt wurde, dass das Kokosnussfett weniger als 5 Gew.-% Laurinsäure enthält.

## Revendications

1. Emulsion liquide comestible continue en graisse comprenant de 3 à 40% en poids de l'émulsion totale d'une phase aqueuse dispersée et de 60 à 97% en poids de l'émulsion totale d'une phase grasse continue, dans laquelle ladite phase grasse comprend de 80 à 100% en poids de la phase grasse totale de triglycérides d'acides gras, dans laquelle ces acides gras sont présents dans les quantités suivantes (en poids, sur le total des acides gras):
- 1 à 15% d'acide caprylique
- 1 à 15% d'acide caprique
- 0 à 1% d'acide laurique
- 40 à 95% d'acides gras longs de 16 atomes de carbone ou plus, insaturés simples ou multiples pris ensembles
- 5 à 25 d'acides gras saturés longs de 16 atomes de carbone ou plus.

2. Emulsion liquide comestible continue en graisse selon la revendication 1, qui comprend de 5 à 35% en poids de la formulation totale d'une phase aqueuse dispersée et de 65 à 95% en poids de l'émulsion totale d'une phase grasse continue, l'émulsion comprend de préférence de 10 à 30% en poids de la formulation totale d'une phase aqueuse dispersée et de 70 à 90% en poids de l'émulsion totale d'une phase grasse continue.

3. Emulsion liquide comestible continue en graisse selon la revendication 1 ou 2, dans laquelle ladite phase grasse comprend de 80 à 100% en poids de la phase grasse totale de triglycérides d'acides gras, dans laquelle ces acides gras sont présents dans les quantités suivantes (en poids, sur le total des acides gras):
- 2 à 12% d'acide caprylique, de préférence 4 à 10% de C8:0
- 2 à 12% d'acide caprique, de préférence 3 à 8% de C10:0
- 0 à 0,8% d'acide laurique, de préférence 0 à 0,6% de C12:0
- 50 à 90% d'acides gras longs de 16 atomes de carbone ou plus, insaturés simples ou multiples pris ensembles
- 7 à 20% d'acides gras saturés longs de 16 atomes de carbone ou plus.

4. Emulsion liquide comestible continue en graisse selon l'une quelconque des revendications 1 à 3, qui comprend en outre de 0,2 à 2% d'un sel, de préférence du NaCl.

5. Emulsion liquide comestible continue en graisse selon l'une quelconque des revendications 1 à 4, qui comprend en outre de 0,1 à 0,7% en poids de l'émulsion de lécithine.

6. Procédé de préparation d'une émulsion comestible liquide continue en graisse comprenant de 3 à 40% en poids de l'émulsion totale d'une phase aqueuse dispersée et de 60 à 97% en poids de l'émulsion totale d'une phase grasse continue, dans laquelle ledit procédé comprend les étapes consistant à:
a) fournir une phase aqueuse,
b) fournir une phase grasse comprenant de 5 à 50% d'une graisse de noix de coco fractionnée contenant moins de 10% d'acide gras laurique en poids sur la graisse de noix de coco, 50 à 95% d'une huile végétale liquide à 15°C et de 1 à 5% d'une matière grasse solide à 40°C, la phase grasse étant à une température à laquelle la phase grasse est liquide,
c) mélanger la phase grasse de l'étape b) avec la phase aqueuse de l'étape a) pour former une émulsion eau dans huile, dans laquelle les températures de la phase grasse et de la phase aqueuse sont telles que la température de l'émulsion obtenue est supérieure à 60°C,
d) soumettre l'émulsion de l'étape c) à un échangeur de chaleur à surface raclée avec une température de sortie comprise entre 0 et 40°C.

7. Procédé selon la revendication 6, dans lequel l'huile végétale liquide à 15°C comprend de l'huile de tournesol, de l'huile de soja, de l'huile de carthame, de l'huile de lin ou un mélange de celles-ci.

8. Procédé selon la revendication 6 ou 7, dans lequel la matière grasse solide à 40°C comprend une huile végétale complètement durcie.

9. Utilisation d'une émulsion liquide comestible continue en graisse comprenant de 3 à 40% en poids de l'émulsion totale d'une phase aqueuse dispersée et de 60 à 97% en poids de l'émulsion totale d'une phase grasse continue pour frire de la viande, du poisson ou des légumes, dans laquelle ladite phase grasse comprend de 80 à 100% en poids de la phase grasse totale de triglycérides d'acides gras, dans lequel ces acides gras sont présents dans les quantités suivantes (en poids du total des acides gras):
- 1 à 15% d'acide caprylique
- 1 à 15% d'acide caprique
- 0 à 1% d'acide laurique
- 40 à 95% d'acides gras longs de 16 atomes de carbone ou plus, insaturés simples ou multiples pris ensembles
- 5 à 25% d'acides gras saturés longs de 16 atomes de carbone ou plus.

10. Utilisation selon la revendication 9, dans lequel ladite phase grasse comprend de 80 à 100% en poids de la phase grasse totale de triglycérides d'acides gras, ces acides gras étant présents dans les quantités suivantes (en poids sur le total des acides gras):
- 2 à 12% d'acide caprylique, de préférence 4 à 10% de C8:0
- 2 à 12% d'acide caprique, de préférence 3 à 8% de C10:0
- 0 à 0,8% d'acide laurique, de préférence 0 à 0,6% de C12:0
- 50 à 90% d'acides gras longs de 16 atomes de carbone ou plus, insaturés simples ou multiples pris ensembles
- 7 à 20% d'acides gras saturés longs de 16 atomes de carbone ou plus.

11. Utilisation selon la revendication 9 ou 10, dans laquelle l'émulsion liquide comestible continue en graisse comprend de 5 à 35% en poids de la formulation totale d'une phase aqueuse dispersée et de 65 à 95% en poids de l'émulsion totale d'une phase grasse continue, de préférence, l'émulsion comprend de 10 à 30% en poids de la formulation totale d'une phase aqueuse dispersée et de 70 à 90% en poids de l'émulsion totale d'une phase grasse continue.

12. Utilisation selon l'une quelconque des revendications 9 à 11, dans laquelle l'émulsion comprend en outre de 0,2 à 2% d'un sel, de préférence du NaCl.

13. Utilisation selon l'une quelconque des revendications 9 à 12, dans laquelle l'émulsion liquide comestible continue en graisse comprend en outre de 0,1 à 0,7% en poids de l'émulsion de lécithine.

14. Utilisation d'une émulsion liquide comestible continue en graisse comprenant de 3 à 40% en poids de l'émulsion totale d'une phase aqueuse dispersée et de 60 à 97% en poids de l'émulsion totale d'une phase grasse continue pour frire de la viande, du poisson ou des légumes, dans laquelle la phase grasse continue comprend de 5 à 20% de graisse de noix de coco, **caractérisée en ce que** l'acide laurique a été éliminé de ladite graisse de noix de coco de telle sorte que la graisse de noix de coco contient moins de 5% en poids d'acide gras laurique.
